# EUROPÄISCHE PATENTSCHRIFT

(11) **EP 0 561 862 B1**
(45) Veröffentlichungstag und Bekanntmachung des Hinweises auf die Patenterteilung: **20.03.1996**
(21) Anmeldenummer: 92900260.8
(22) Anmeldetag: 04.12.1991
(51) Int. Cl.: H05B 41/29, H05B 41/392

(54) **SCHALTUNGSANORDNUNG ZUM IMPULSBETRIEB VON HOCHDRUCKENTLADUNGSLAMPEN**
ELECTRICAL CIRCUIT FOR THE PULSED OPERATION OF HIGH-PRESSURE GAS-DISCHARGE LAMPS
CIRCUIT DE FONCTIONNEMENT IMPULSIONNEL DE LAMPES A DECHARGE HAUTE PRESSION

(30) Priorität: 05.12.1990 DE 4039186
(43) Veröffentlichungstag der Anmeldung: 29.09.1993
(73) Patentinhaber: Patent-Treuhand-Gesellschaft für elektrische Glühlampen mbH, D-81543 München (DE); NARVA BERLINER GLÜHLAMPENWERK GMBH, D-10245 Berlin (DE)
(72) Erfinder: BÖNIGK, Michael, D-1017 Berlin (DE)
(86) Internationale Anmeldenummer: DE9100940
(87) Internationale Veröffentlichungsnummer: WO9210920

(56) Entgegenhaltungen:
- EP-A- 0 334 356
- EP-A- 0 447 010
- DE-A- 2 729 052

## Beschreibung

Die Erfindung betrifft eine Schaltungsanordnung zum Impulsbetrieb von Hochdruckentladungslampen gemäß dem Oberbegriff des Anspruchs 1.

Es ist seit längerer Zeit bekannt, daß mit Hilfe eines impulsförmigen Versorgungsstromes die lichttechnischen Parameter von Entladungslampen wesentlich verbessert werden können. Besondere Aufmerksamkeit haben diese Verfahren bei Natriumdampfhochdrucklampen gefunden, bei denen durch Auftastung die Farbtemperatur von ca. 2000 auf über 3000 K angehoben werden kann. Gleichzeitig ist eine Verbesserung der Farbwiedergabe möglich. Die Patentschriften DE-PS 26 57 824 und DE-PS 28 25 532 weisen auf diese Sachverhalte hin.

Beim Betrieb von Natriumdampfentladungslampen mit mehreren Metalldämpfen sind bipolare Impulse zu verwenden, um Entmischungserscheinungen zu vermeiden.

Die Beschaffenheit der Auftastimpulse, ihre Form, die Impulsbreite, das Tastverhältnis, der Anstieg und die Höhe haben einen entscheidenden Einfluß auf die zu erreichenden lichttechnischen Parameter. Vorzugsweise wird in den meisten Lösungen mit relativ breiten Impulsen (ca. 100 bis 200 us) und Tastverhältnissen um 0,2 gearbeitet, wobei die Wiederholfrequenzen unter 500 Hz liegen, wie in der DE-PS 36 36 901 beschrieben.

Bei Frequenzen über 500 Hz neigt das Entladungssystem zu Resonanzerscheinungen, welche sich in starken Bogeninstabilitäten und Lichtausbeuteverlusten äußern (DE-PS 31 22 183). Es ist auch bekannt, die Impulsgeometrie und Impulsformung bei dem Einsatz von elektronischen Vorschaltgeräten so zu gestalten, daß die Impulse einen schnellen Übergang von der Abkühlphase in den Zustand einer vorgegebenen Impulsleistung, eine ausgedehnte Wirkzeit in diesem Niveau und eine schnelle Rückführung in den Zustand der Abkühlphase aufweisen. Zur Impulsformung wird eine mehrgliedrige Laufzeitkette, bestehend aus kapazitiven und induktiven Bauelementen, vorgeschlagen. Wie aus Untersuchungen bekannt ist, liegt die optimale Impulsbreite für Natriumdampfentladungslampen zwischen 100 und 200 µs, so daß bei Verwendung von Laufzeitketten zur Impulsformung ein entsprechendes elektronisches Vorschaltgerät sehr bauelementeaufwendig und voluminös wäre. Prinzipiell ist festzustellen, daß die Erzeugung relativ breiter Impulse mit entsprechender Höhe hohe Anforderungen an die Vorschalttechnik stellt, da große Energiemengen gespeichert und geschaltet werden müssen.

Schaltungsanordnungen zum impulsförmigen Betrieb von Hochdruckentladungslampen sind z.B. aus der DE-OS 36 41 070, der DE-PS 35 40 985 und der DE-PS 26 57 824 bekannt.

Ein wesentlicher Nachteil der genannten Schaltungsanordnungen ist der große technische Aufwand bei ihrer Realisierung sowie die teilweise zu erwartenden großen Verluste in den strombegrenzenden Bauelementen. Weiterhin ist eine Grundlasteinspeisung nur durch eine aufwendige Erweiterung der Schaltung möglich.

Aufgabe der Erfindung ist es, eine Schaltungsanordnung für Hochdruckentladungslampen zu schaffen, die mit geringem technischen Aufwand einen Impulsbetrieb bei sinusähnlicher Haltelast ermöglicht.

Erfindungsgemäß wird die Aufgabe dadurch gelöst, daß zur Erzeugung der Tastimpulse, parallel zu mindestens einem der in Reihe zur Hochdruckentladungslampe liegenden Blindwiderstände, ein oder mehrere Blindwiderstände als Energiespeicher in Reihe mit einem oder mehreren Schaltelementen angeordnet sind.

Die Reihenschaltung aus Blindwiderstand bzw. Blindwiderstände und Schaltelement bzw. Schaltelemente besteht entweder aus
- einer Kapazität in Reihe mit einem elektromechanischen oder elektronischen Schalter oder aus
- einer Induktivität in Reihe mit einem elektromechanischen oder elektronischen Schalter oder aus
- einer Induktivität und Kapazität (Reihenschwingkreis) in Reihe mit einem elektromechanischen oder elektronischen Schalter.

Es kann festgestellt werden, daß auch konventionelle Halbbrückenschaltungen mit Reihenresonanzkreis bei der Versorgung von getasteten Entladungen Anwendung finden können, sofern es gelingt, die von der Halbbrückenschaltung gelieferte Energie im Auftastmoment schlagartig zu erhöhen. Dieses wird mit der vorgeschlagenen Schaltungsanordnung realisiert.

Für das vorgestellte Schaltungsbeispiel ist, im Vergleich zu konventionellen Halbbrückenschaltungen kaum ein Mehraufwand notwendig. Hierbei werden alle benötigten Funktionen zum Impulsbetrieb, wie Zündung, Haltelastversorgung und Auftastung erfüllt. Der Lampenbetrieb erfolgt bei dieser Schaltungsanordnung mit sinusähnlichen Impulsen.

Überraschenderweise konnte bei Untersuchungen an Natriumdampfhochdrucklampen festgestellt werden, daß das Plasma auch noch sehr schmalen nadelförmigen Impulsen zu folgen vermag, d.h. daß auch hier eine wirksame Erhöhung der Farbtemperatur und der Farbwiedergabe möglich ist, wobei die mittlere Leistung im wesentlichen von der Energie der Tastimpulse und deren Frequenz, unter Vernachlässigung einer möglichen Halteleistung, abhängig ist. Durch Anordnung der Einzelimpulse zu Impulsgruppen ist es gelungen, die Resonanzerscheinungen zu unterdrücken. Die Frequenz der Einzelimpulse ist so zu wählen, daß Resonanzfrequenzlücken ausgenutzt werden, oder sie über dem Resonanzband des Entladungssystems liegt.

Die in die Lampe eingespeiste mittlere Leistung ist nun im wesentlichen von der Breite der Impulsgruppen und der Wiederholfrequenz der Impulsgruppen abhängig.

Es ist kein Lichtausbeuteverlust gegenüber dem Tastbetrieb mit breiten rechteckförmigen Impulsen nachweisbar, wobei auch die lichttechnischen Parameter, wie Farbtemperatur und Farbwiedergabe, identische Werte erreichen.

Die Erfindung soll anhand eines Ausführungsbeispiels und den zugehörigen Zeichnungen näher erläutert werden.
- Figur 1: zeigt ein Prinzipschaltbild
- Figur 2: zeigt eine Schaltungsanordnung mit elektronischen Schaltern

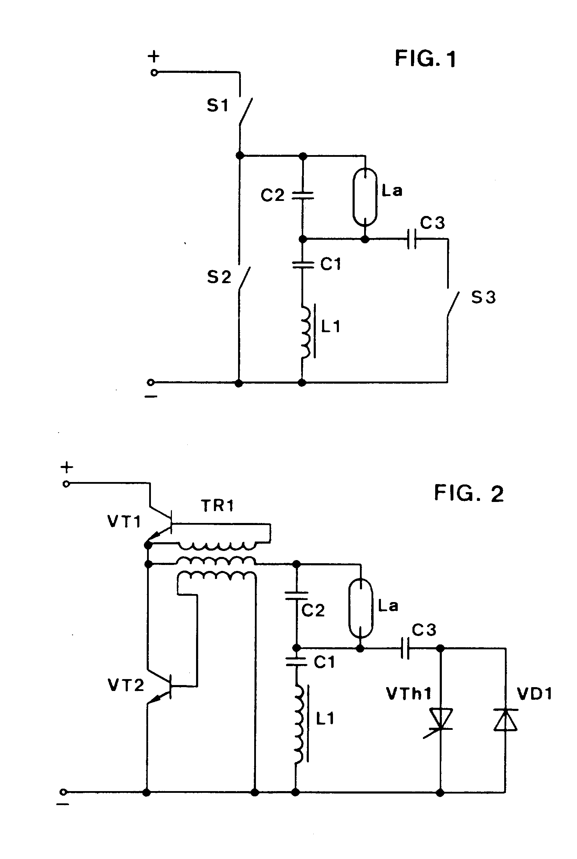

Wie in Fig. 1 dargestellt, bilden zwei Schalter S1, S2 eine Halbbrücke und werden gegenphasig angesteuert. Wird der Schwingkreis aus den Kondensatoren C1 und C2 sowie der Induktivität L1 in der Nähe seiner Resonanzfrequenz betrieben, so kann mit Hilfe der Spannungsüberhöhung am Kondensator C2 die Hochdruckentladungslampe La gezündet werden. Nach dem Zünden wirkt diese als Last, und die Spannung über dem Kondensator C2 bricht auf die Brennspannung zusammen. Der somit fließende sinusähnliche Strom wird als Haltestrom genutzt.

Die notwendige schnelle Energieerhöhung im Auftastmoment wird durch die Parallelschaltung eines Kondensators C3 in Reihe mit einem Schalter S3 zu den zwei Blindwiderständen, dem Kondensator C1 und der Induktivität L1, erreicht.

Bei Zuschaltung einer weiteren Induktivität in Reihe zum Kondensator C3 kann auch dieser Schwingkreis zur Zündung genutzt werden.

Zur Auftastung der Lampe wird der Schalter S3 geschlossen. Über den Schalter S1 und die Hochdruckentladungslampe La wird der Kondensator C3 aufgeladen und über den Schalter S2 und die Hochdruckentladungslampe La entladen. Somit entstehen, je nach der Kapazität des Kondensators C3, sehr stromstarke Impulse. Dazu wird keine zusätzliche Halbbrückenschaltung benötigt.

Fig. 2 stellt ein Ausführungsbeispiel dar. Die Schalter S1, S2 werden durch Transistoren VT1, VT2 realisiert. Hierbei können bipolare oder auch unipolare Transistoren zum Einsatz kommen. Der Schalter S3 ist als elektronischer Schalter mit einem Thyristor VTh1 und einer antiparallelgeschalteten Diode VD1 ausgebildet. Die Reihenschaltung des Kondensators C3 mit einer weiteren Induktivität ist möglich.

Die Halbbrücke kann selbstschwingend oder fremdgesteuert betrieben werden. Im Ausführungsbeispiel wurde eine selbstschwingende Halbbrücke mit einem Stromwandler TR1 im Sättigungsbetrieb gewählt. Die Ansteuerung des Thyristors VTh1 übernimmt eine einfache Multivibratorschaltung. Diese kann, je nach Anwendungsfall, synchron oder asynchron zur Haltestromfrequenz arbeiten.

Die erforderliche Gleichspannung wird durch Netzgleichrichtung gewonnen.

Bei Zündung der Hochdruckentladungslampe über eine externe Zündeinrichtung kann der Kondensator C2 entfallen.

## Patentansprüche

1. Schaltungsanordnung zum Impulsbetrieb einer Hochdruckentladungslampe, bei der diese in Reihe mit Blindwiderständen liegt, parallel zur Hochdruckentladungslampe eine Kapazität angeordnet ist, und die Anordnung von einer Halbbrücke gespeist wird, gekennzeichnet dadurch, daß zur Erzeugung der Tastimpulse parallel zu mindestens einem der in Reihe zur Hochdruckentladungslampe (La) liegenden Blindwiderständen (C1, L1) ein oder mehrere Blindwiderstände (C3) als Energiespeicher in Reihe mit einem oder mehreren Schaltelementen (S3) angeordnet sind.

2. Schaltungsanordnung nach Anspruch 1, gekennzeichnet dadurch, daß die Reihenschaltung aus einem oder mehreren Blindwiderständen (C3) und einem cder mehreren Schaltelementen (S3) entweder aus
- einer Kapazität (C3) in Reihe mit einem elektromechanischen oder elektronischen Schalter (VTh1, VD1) oder
- einer Induktivität in Reihe mit einem elektromechanischen oder elektronischen Schalter oder
- einer Induktivität und Kapazität (Reihenschwingkreis) in Reihe mit einem elektromechanischen oder elektronischen Schalter besteht.

## Claims

1. Circuit arrangement for the pulsed operation of a high-pressure discharge lamp in which the latter is in series with reactances, a capacitor is arranged in parallel with the high-pressure discharge lamp and the arrangement is supplied by a half-bridge, characterized in that, to generate the gating pulses, one or more reactances (C3) in series with one or more switching elements (S3) are arranged as energy store in parallel with at least one of the reactances (C1, L1) situated in series with the high-pressure discharge lamp (La).

2. Circuit arrangement according to Claim 1, characterized in that the series circuit comprising one or more reactances (C3) and one or more switching elements (S3) comprises either
- a capacitor (C3) in series with an electromechanical or electronic switch (VTh1, VD1) or
- an inductance in series with an electromechanical or electronic switch or
- an inductance and capacitor (series resonant circuit) in series with an electromechanical or electronic switch.

## Revendications

1. Montage pour faire fonctionner de manière impulsionnelle une lampe à décharge haute pression, dans lequel cette lampe est branchée en série avec des réactances, une capacité est branchée en parallèle avec la lampe à décharge haute pression et le disposif est alimenté par un demi-pont, caractérisé par le fait que pour la production des impulsions de cadence en parallèle avec au moins l'une des réactances (C1,L1) branchée en série avec la lampe à décharge haute pression (La), une ou plusieurs réactances (C3) sont branchées en tant qu'accumulateurs d'énergie en série avec un ou plusieurs éléments d'interruption (S3).

2. Montage suivant la revendication 1, caractérisé par le fait que le circuit série formé d'une ou de plusieurs réactances (C3) et d'un ou de plusieurs éléments de commutation (S3) est constitué
- d'une capacité (C3) en série avec un interrupteur électromécanique ou électronique (VTh1, VD1), ou
- d'une inductance en série avec un interrupteur électromécanique ou électronique, ou
- d'une inductance et d'une capacité (circuit oscillant série) en série avec un interrupteur électromécanique ou électronique.
